**Europäisches Patentamt**

**European Patent Office**

**Office européen des brevets**

(11) Publication number: **0 364 180**
**A2**

## (12) EUROPEAN PATENT APPLICATION

(21) Application number: **89310277.2**

(22) Date of filing: **06.10.89**

(51) Int. Cl.5: **G06F 15/401**

(30) Priority: **11.10.88 US 255338**

(43) Date of publication of application:
**18.04.90 Bulletin 90/16**

(84) Designated Contracting States:
**BE DE FR GB IT LU NL**

(71) Applicant: **NeXT INC.**
**900 Chesapeake Drive**
**Redwood City California 94063(US)**

(72) Inventor: **Hawley, Michael J.**
**665 Woodland Avenue**
**Menlo Park California 94025(US)**

(74) Representative: **Hartley, David**
**Withers & Rogers 4 Dyer's Buildings Holborn**
**London, EC1N 2JT(GB)**

(54) **Method and apparatus for indexing files on a computer system.**

(57) A method and apparatus for automatically index-
ing and retrieving files in large computer file sys-
tems is provided. Keywords are automatically ex-
tracted from files to be indexed and used as the
entries in an index file. Each file having one of the
index entries as a keyword is associated in the index
with that keyword. If a file is to be retrieved, and its
content but not it name or location is known, its
keywords are entered and its identifying information
will be displayed (along with that of other files having
that keyword), facilitating its retrieval.

EP 0 364 180 A2

## METHOD AND APPARATUS FOR INDEXING FILES ON A COMPUTER SYSTEM

Background of the Invention

This invention relates to file indexing systems. More particularly, this invention relates to the automatic indexing of text files in a computer file system based on file content.

Computer operating systems typically provide file directories which list for a user all files stored in the file system (e.g., disk memory) of the computer. It is up to the user to know, based on the file titles, which files he is interested in. As the number of files increases, it becomes more difficult to scan all of the file titles quickly and efficiently. Although most operating systems allow directories to be divided further into subdirectories, each of which contains only a fraction of the total number of files in the file system, it is then necessary to know which subdirectory to scan, and it is still necessary to scan the subdirectory by file title. The problem is compounded if the computer is connected to a network and has access not only to its own file storage systems, but to all those on the network.

In addition, when an application program must access a file, there is no way for it to determine on its own which file to access. The file titles give no indication to the program of the file content. Instead, the file title or at least some portion of it must be specified to the program. Even if the file was created by the program itself and has a title with a particular format, it is only because the program is designed to look for that format that it can find the file.

Database programs are known which will index files based on keywords selected from the file contents. A user of such a program need only make a query based on one of those keywords, and the program will find all files indexed under that keyword. The user then need select only from among the relatively small number of files selected from the index. However, in order to index files for use in such a database, the keywords must be manually entered.

It is also possible to index text files by listing every word that occurs in the file, but such an index would be as large as the file itself, and thus would not be useful. Such an index could ignore common words such as "a", "the", "to", "be", and "not", but an index constructed according to such rules would not be useful for, e.g., finding Hamlet's soliloquy in a set of files containing the complete works of William Shakespeare.

It would be desirable to be able to provide a way for both users of, and application programs running on, a computer system, to be able to select from among many text files in a computer file system based on keywords which are selected from the files by the computer system itself.

Summary of the Invention

It is an object of this invention to provide a way for both users of, and application programs running on, a computer system, to be able to select from among many text files in a computer file system based on keywords which are selected from the files by the computer system itself.

In accordance with this invention, there is provided, for use in a computer system having a mass storage file system, apparatus for automatic indexing of files stored in said file system. The apparatus includes means for maintaining at least one index file on said file system, the at least one index file containing a date of most recent indexing and, for each of at least some of the stored files, information regarding a date of last updating for that file, and an association of that file with a list of at least one keyword.

The apparatus also includes means for automatically updating the index file when a new file is added to the file system and when an existing file is updated. The automatic updating means includes means for, for each file, comparing the date of most recent indexing and the date of last updating for that file, means for determining if the date of last updating of that file is later than the date of most recent indexing, and means for updating the keyword association information upon a determination by the determining means that the date of last updating of that file is later than the date of most recent indexing.

A method according to which the apparatus operates is also provided.

Brief Description of the Drawings

The above and other objects and advantages of the invention will be apparent upon consideration of the following detailed description, taken in conjunction with the accompanying drawings, in which like reference characters refer to like parts throughout, and in which:

FIG. 1 is a flow diagram of a first computer program used to implement the present invention;

FIG. 2 is a flow diagram of a second computer program used to implement the present invention;

FIG. 3 is a flow diagram of a third computer program used to implement the present invention;

and

FIG. 4 is a block diagram of an exemplary hardware configuration for a computer system on which the present invention can be implemented.

Detailed Description of the Invention

The present invention facilitates the indexing of files or, more specifically, the retrieval of files, based on keywords. To find the file, one would initiate a search request based on words which one thought would be descriptive of the subject matter of the file being sought. If the keywords were chosen properly, those words would be among those that had been selected as keywords, and would allow the file to be found. As a result, the search request would retrieve a relatively short list of files for which the words used in the search request had been designated as keywords. The user, or application program, would then have to select only from among those files, rather than from among all of the files in the file system.

It is most efficient, and therefore desirable, to select keywords from a file and index the file automatically, each time the file is updated, as well as when the file is first created. One should at least update one's index periodically, and preferably relatively frequently, so that not a long period of time passes between the creation of a new file or the updating of an existing file, and the updating of the index. One possible system and method for automatically extracting keywords from files, which can be used in the preferred embodiment of the invention, is described in copending, commonly-assigned United States patent application Serial No. (NX-5), filed concurrently herewith and hereby incorporated by reference in its entirety.

According to the invention, at least one special index file is kept on the file system. There may be more than one index file if certain types of files, such as computer program source code listings, are to be indexed in different ways. Each index file might include, for each file indexed by it, the file name, a natural language (e.g., English) description of the file, information relating to the type of file, the file size and the last date and time it was updated. The index file also includes information on the last date and time it itself was updated.

Preferably, the indexing process according to the invention is carried out automatically at regular intervals, and can also be invoked by a user whenever desired. Alternatively, the invention could be implemented so that the process is carried out automatically without a manual option, or so that the process only is carried out manually.

In the indexing process of the invention, all files associated with a particular index are examined. (The association of a newly-created file with a particular index could be made by the user at the time of file creation, or by an automatic process invoked whenever a file is created.) If the file was written to since the last time the index was updated, then that file is reindexed. If a file is new, its time of creation is the last time it was written to, and that would be after the last time the index was updated, so any new files would be indexed.

The indexing process is as follows:

A list of file types is kept as a separate file on the file system. The list includes information useful in indexing the different types of files. For example, if a file is pure numerical data, compiled object code for a computer program, or some other type of non-textual data, it is not indexed at all. This does not cause any difficulty because one cannot search usefully on that type of file.

In order to index a file, a keyword extraction process is performed on it to identify keywords and their weighted occurrence in the file. In one possible keyword extraction process for use with this invention, described more fully in said above-incorporated patent application, a word is marked as a keyword if it occurs in the file more often than the same word occurs in some reference domain. The choice of reference domain may be governed by the type of file. For example, one would use Elizabethan English rather than contemporary American English as a reference domain when indexing files containing the works of Shakespeare. The file type list thus facilitates the choice of the proper domain. The file type list also indicates for each file type a filter function. The indexing process uses the indicated filter function for the particular file being indexed to remove from that file words which are not to be used for indexing purposes and thus are to be ignored during keyword extraction, such as common prepositions, pronouns, articles, etc., because they occur so frequently that counting them would occupy too many system resources without providing much useful indexing data. In some cases, the filter function would actually derive the keywords without resort to the general keyword extraction process. This might be done with certain specialized file types such as computer program source code files. It would not be useful to index such files based on any of the reserved words used by the particular programming language. The only words in a source code listing that would be unique enough to be useful for indexing in most cases would be variable names. Therefore, if the file type indicated a source code file, the keyword extraction process might end by calling the filter function for that programming language. Such a filter function might operate as a subset of a compiler, identifying all variable names and reporting their weighted occurrence in the file.

A particular index file might have associated with itself a special keyword extraction routine. The indexing process would check for the existence of such a routine before invoking the general keyword extraction process and, if it existed, would invoke the special keyword extraction routine for all files indexed in that index. An index file may even have its own indexing routine which, if it existed, would override the general indexing routine.

The indexing process receives the results of the keyword extraction process and stores in the index file involved, in association with a particular keyword, the files being indexed and the weight of occurrence of that keyword in each file. The files associated with each keyword are listed, with their weights, in either chronological or reverse chronological order according to when they were added to the index, so that one could determine the order in which particular files were added to the index.

The invention also includes a retrieval process. A search request would be formulated by a user or by an application program for files containing a particular keyword. The search request might also be a boolean expression involving more than one key word. The query might be directed to all index files on the file system, or might be limited to one or more specific index files. The system would search the specified index or indices and would return a list of files, showing the keywords and their weighted occurrences, and possibly the last update date and time for each file as well. The user, or the application program, could then select the desired file from the list based on file name, or possibly based on the weighted occurrences. An application program that is searching for a file would be especially likely to rely on the weighted occurrences more than the file names. In fact, the invention might be implemented in such a way that a file is only included on the retrieval list if the weight of occurrence of the keyword being searched on exceeds some minimum defined by the user or the program that formulates the search request.

Indexing and searching of files according to this invention can be enhanced through the use of conventional hashing techniques of the type well-known to those skilled in the art.

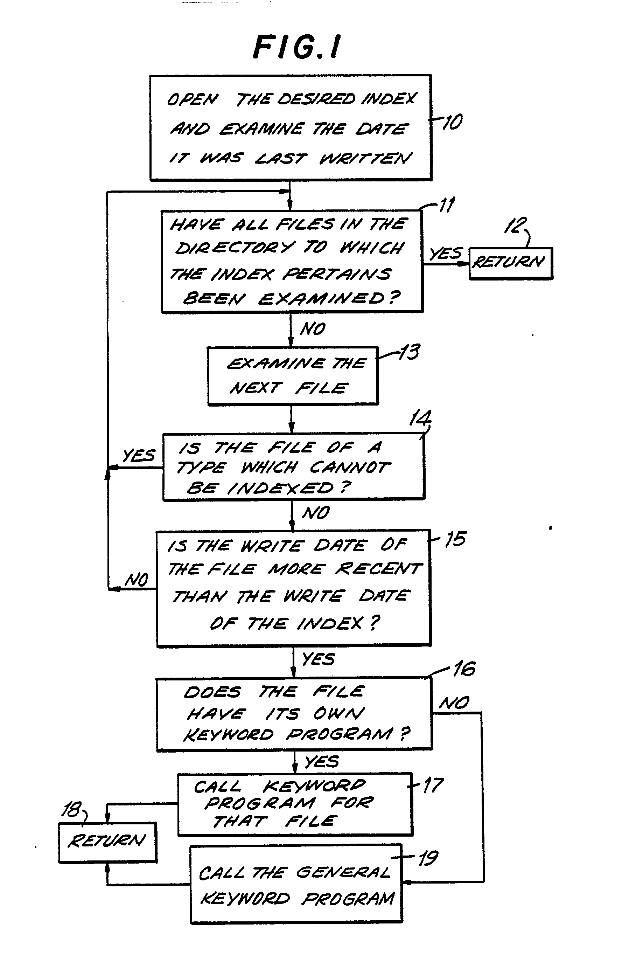

Suitable computer programs for implementing this invention are provided in the Appendices at the end of this specification. These computer programs are written in the well-known C programming language and can be performed on many conventional computers such as a conventional Model 3/50 workstation available from Sun Microsystems, Inc., of Mountain View, California. Flow diagrams for these programs are shown in FIGS. 1-3 and described below.

FIG. 1 is a flow diagram of the "index" routine of Appendix A, which is the routine which updates one or more indices by searching through the file system, or a portion thereof, depending on how much of the file system each index pertains to. At step 10, the routine begins in the "indexdir(s)" routine by opening the desired index and noting the date (and time) it was most recently updated. At step 11, the "index" routine tests to see if it has examined all files to which the index pertains. If it has, the "index" routine ends at step 12. Otherwise, the next file is examined by the "note" routine at step 13. At step 14, the "note" routine tests to see if the file is of a type (e.g., numerical data) that cannot be indexed. If it is, the "index" routine returns to step 11 to see if there are more files to be examined. If the file is indexable, the "modified-(b)" routine checks at step 15 to see if the index should be updated with respect to the particular file by checking the most recent write date of the file and comparing it to the most recent write date of the index. If the write date of the file is not more recent than the write date of the index, the file has not been modified and the "index" routine returns to step 11 to check the next file, if any. If the write date of the file is more recent than the write date of the index, the file has been modified since the last time it was indexed. If so, then at step 16 the "note" routine checks to see if the file has its own associated keyword extraction program. If it does, the associated keyword extraction routine is called at step 17 and the "index" routine ends at step 18. Otherwise, a general keyword extraction routine, such as that described in the above-incorporated application, is called at step 19, and the "index" routine ends at step 18.

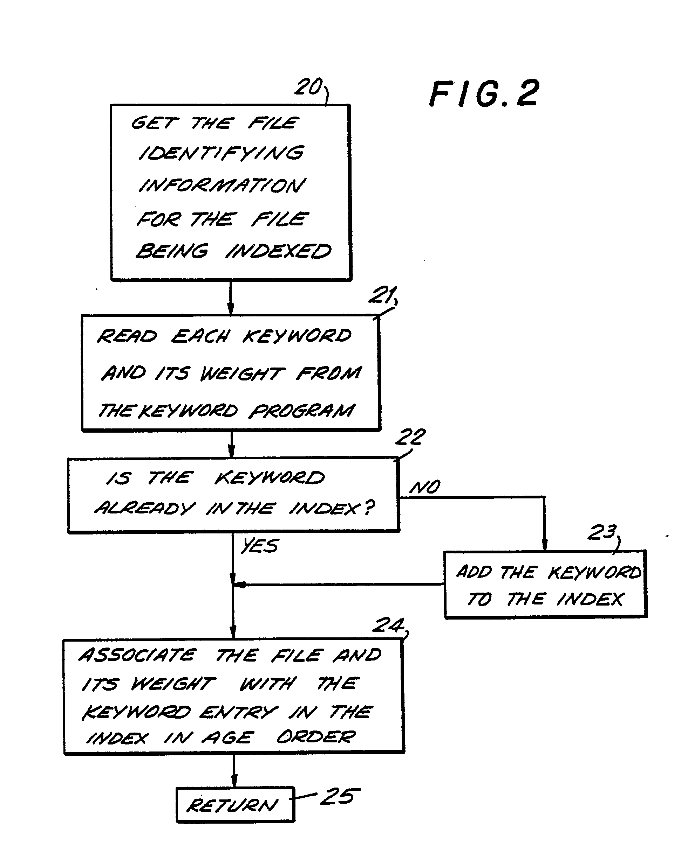

FIG. 2 is a flow diagram of the "dbAddIndex" routine of Appendix B, which is called at step 20 after the keyword extraction routine has been run on a file. The "dbAddIndex" routine adds keywords and associated files to the index. At step 20, the file identifying information (e.g., name, description, type, size, and date and time of most recent update) for the file with respect to which the index is being updated is obtained from the file. At step 21, each keyword for the file, and the weight of that keyword, is read in from the keyword extraction routine. At step 22, the routine tests to see if the keyword already exists in the index. If not, then the keyword is added to the index at step 23 and the routine proceeds to step 24. Otherwise, the routine proceeds directly to step 24, where the file (including all its identifying information) and the weight of the keyword in the file are associated with the keyword entry in the index. As stated above, the associations for each keyword are listed in the chronological order or reverse chronological order in which they were added to the index, so that by looking at all associations for a particular keyword, one can tell the order in which each file became associated with that keyword. The "dbAddIndex" routine then ends at step 25.

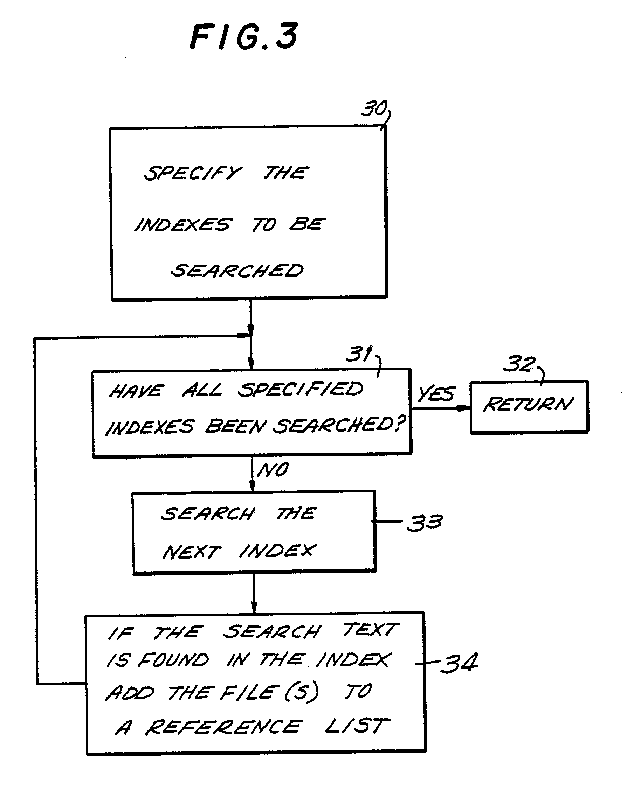

FIG. 3 is a flow diagram of the "findManFile(s)" routine of Appendix C which is exemplary of routines that can be used to retrieve files that have been indexed. At step 30, the index or indices to be searched are specified by the user or other program calling the routine. At step 31, the routine checks to see if all indices to be searched have been searched. If so, the routine ends at step 32. Otherwise, the next index is searched at step 33. If at step 34 the search text is found as a keyword in the index being searched, then the file or files with which it is associated are added to a reference list along with all identifying information and weights. The routine then returns to step 31 to see if any more indices need to be searched. Once the routine has ended at step 32, the reference list is presented to the user or other program that called the "findManFile" routine.

Hardware System

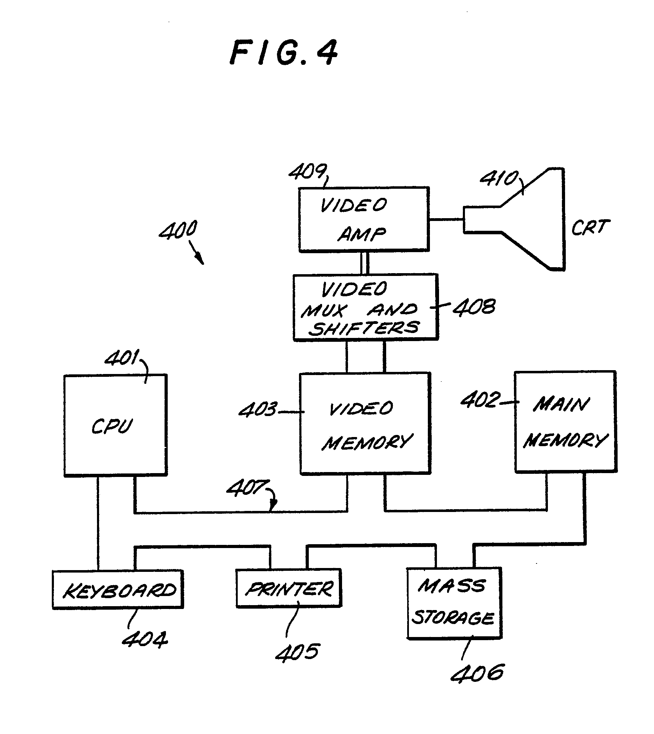

While the present invention may advantageously be implemented on nearly any conventional computer system, an exemplary hardware system 400 on which the present invention is implemented is shown in FIG. 4.

FIG. 4 shows a preferred embodiment of a hardware system 400 implementing the present invention as part of a computer system. In FIG. 4, system 400 includes CPU 401, main memory 402, video memory 403, a keyboard 404 for user input, printer 405, and mass storage 406 which may include both fixed and removable media using any one or more of magnetic, optical or magneto-optical storage technology or any other available mass storage technology and in which the files to be indexed and searched are stored (the files can be entered from keyboard 404 or directly into mass storage 406 on removable media; if system 400 is part of a network of computer systems, the file system might include all or part of the mass storage available on other systems on the network). These components are interconnected via conventional bidirectional system bus 407. Bus 407 contains 32 address lines for addressing any portion of memory 402 and 403. System bus 407 also includes a 32 bit data bus for transferring data between and among CPU 401, main memory 402, video memory 403, and mass storage 406. In the preferred embodiment of system 400, CPU 401 is a Motorola 68030 32-bit microprocessor, but any other suitable microprocessor or microcomputer may alternatively be used. Detailed information about the 68030 microprocessor, in particular concerning its instruction set, bus structure, and control lines, is available from MC68030 User's Manual, published by Motorola Inc., of Phoenix, Arizona.

Main memory 402 of system 400 comprises eight megabytes of conventional dynamic random access memory, although more or less memory may suitably be used. Video memory 403 comprises 256K bytes of conventional dual-ported video random access memory. Again, depending on the resolution desired, more or less such memory may be used. Connected to a port of video memory 403 is video multiplex and shifter circuitry 408, to which in turn is connected video amplifier 409. Video amplifier 409 drives cathode-ray tube (CRT) raster monitor 410. Video multiplex and shifter circuitry 408 and video amplifier 409, which are conventional, convert pixel data stored in video memory 403 to raster signals suitable for use by monitor 410. Monitor 410 is of a type suitable for displaying graphic images having a resolution of 1120 pixels wide by 832 pixels high.

The reference lists produced by the invention can be stored in mass storage 406, displayed to the user on monitor 410, or printed out on printer 405.

Thus it is seen that a method and apparatus for automatic indexing of files in a computer system are provided. One skilled in the art will appreciate that the present invention can be practiced by other than the described embodiments, which are presented for purposes of illustration and not of limitation, and the present invention is limited only by the claims which follow.

Claims

1. For use in a computer system having a mass storage file system, apparatus for automatic indexing of files stored in said file system, said apparatus comprising:
means for maintaining at least one index file on said file system, said at least one index file containing a date of most recent indexing and, for each of at least some of said stored files, information regarding a date of last updating for that file, and an association of that file with at least one keyword; and
means for automatically updating said at least one index file when a new file is added to said file system and when an existing file is updated, said automatic updating means comprising:
means for, for each file, comparing said date of most recent indexing and said date of last updating for that file,
means for determining if said date of last updating of that file is later than said date of most recent indexing, and

means for updating said keyword association information upon a determination by said determining means that said date of last updating of that file is later than said date of most recent indexing.

2. The apparatus of claim 1 wherein:

each of said stored files has associated therewith a file type; and

said automatic updating means further comprises:

means for, for each file, examining said file type, and

means for, based on said file type, extracting from said file keywords and information concerning the relative occurrences of said keywords.

3. The apparatus of claim 1 further comprising means for retrieving said files based on said keyword association information.

4. For use in a computer system having a mass storage file system, a method for automatic indexing of files stored in said file system, said method comprising:

maintaining at least one index file on said file system, said at least one index file containing a date of most recent indexing and, for each of at least some of said stored files, information regarding a date of last updating for that file, and an association of that file with at least one keyword; and

automatically updating said at least one index file when a new file is added to said file system and when an existing file is updated, said automatic updating step comprising:

for each file, comparing said date of most recent indexing and said date of last updating for that file,

determining if said date of last updating of that file is later than said date of most recent indexing, and

updating said keyword association information upon a determination that said date of last updating of that file is later than said date of most recent indexing.

5. The method of claim 4 wherein:

each of said stored files has associated therewith a file type; and

said automatic updating step further comprises:

for each file, examining said file type, and

based on said file type, extracting from said file keywords and information concerning the relative occurrences of said keywords.

6. The method of claim 4 further comprising retrieving said files based on said keyword association information.

# FIG.1

```
┌─────────────────────────┐
│ OPEN THE DESIRED INDEX  │
│ AND EXAMINE THE DATE    │──10
│ IT WAS LAST WRITTEN     │
└─────────────────────────┘
             │
             ▼
┌─────────────────────────┐        ┌──────────┐
│ HAVE ALL FILES IN THE   │──11    │  RETURN  │──12
│ DIRECTORY TO WHICH      │  YES   └──────────┘
│ THE INDEX PERTAINS      │────────►
│ BEEN EXAMINED?          │
└─────────────────────────┘
         │ NO
         ▼
┌─────────────────────────┐
│ EXAMINE THE             │──13
│ NEXT FILE               │
└─────────────────────────┘
         │
         ▼
┌─────────────────────────┐
│ IS THE FILE OF A        │──14
│ TYPE WHICH CANNOT       │  YES
│ BE INDEXED?             │
└─────────────────────────┘
         │ NO
         ▼
┌─────────────────────────┐
│ IS THE WRITE DATE OF    │──15
│ THE FILE MORE RECENT    │  NO
│ THAN THE WRITE DATE     │
│ OF THE INDEX?           │
└─────────────────────────┘
         │ YES
         ▼
┌─────────────────────────┐
│ DOES THE FILE           │──16
│ HAVE ITS OWN            │  NO
│ KEYWORD PROGRAM?        │
└─────────────────────────┘
         │ YES
         ▼
┌─────────────────────────┐
│ CALL KEYWORD            │──17
│ PROGRAM FOR             │
│ THAT FILE               │
└─────────────────────────┘
    ┌──────────┐
18──│  RETURN  │
    └──────────┘
┌─────────────────────────┐
│ CALL THE GENERAL        │──19
│ KEYWORD PROGRAM         │
└─────────────────────────┘
```

## FIG.2

```
          ┌─────────────────────┐  20
          │   GET THE FILE      │
          │   IDENTIFYING       │
          │   INFORMATION       │
          │   FOR THE FILE      │
          │   BEING INDEXED     │
          └─────────────────────┘
                    │
                    ▼
          ┌─────────────────────┐  21
          │ READ EACH KEYWORD   │
          │ AND ITS WEIGHT FROM │
          │ THE KEYWORD PROGRAM │
          └─────────────────────┘
                    │
                    ▼
          ┌─────────────────────┐  22
          │  IS THE KEYWORD     │        NO      ┌──────────────────┐  23
          │ ALREADY IN THE INDEX?├───────────────│ ADD THE KEYWORD  │
          └─────────────────────┘               │  TO THE INDEX    │
                    │ YES                        └──────────────────┘
                    │◄──────────────────────────────────┘
                    ▼
          ┌─────────────────────┐  24
          │ ASSOCIATE THE FILE AND │
          │ ITS WEIGHT WITH THE    │
          │ KEYWORD ENTRY IN THE   │
          │ INDEX IN AGE ORDER     │
          └─────────────────────┘
                    │
                    ▼
             ┌───────────┐
             │  RETURN   │  25
             └───────────┘
```

# FIG.3

```
                                                    30
┌──────────────────────────────────┐
│                                  │
│         SPECIFY  THE             │
│                                  │
│       INDEXES  TO  BE            │
│                                  │
│         SEARCHED                 │
│                                  │
└──────────────────────────────────┘
                │
                ▼
┌──────────────────────────────┐        31                32
│  HAVE  ALL  SPECIFIED        │  YES    ┌──────────────┐
│                              │────────▶│   RETURN     │
│ INDEXES  BEEN  SEARCHED?     │         └──────────────┘
└──────────────────────────────┘
                │ NO
                ▼
┌──────────────────────────────┐
│      SEARCH  THE             │  ──── 33
│      NEXT  INDEX             │
└──────────────────────────────┘
                │
                ▼
┌──────────────────────────────┐
│  IF  THE  SEARCH  TEXT       │
│  IS FOUND  IN THE INDEX      │  ── 34
│  ADD THE FILE (S)  TO        │
│  A  REFERENCE  LIST          │
└──────────────────────────────┘
```

# FIG. 4